# EUROPÄISCHE PATENTANMELDUNG

(11) **EP 3 540 914 A1**
(43) Veröffentlichungstag der Anmeldung: **18.09.2019**
(21) Anmeldenummer: 19158998.5
(22) Anmeldetag: 25.02.2019
(51) Int. Cl.: H02K 1/27, H02K 1/30, H02K 15/03, H02K 1/14

(54) **ROTOR FÜR EINEN ELEKTROMOTOR UND HERSTELLUNGSVERFAHREN**

(30) Priorität: 13.03.2018 DE 102018105738
(71) Anmelder: Bühler Motor GmbH, 90459 Nürnberg (DE)
(72) Erfinder: BRETTSCHNEIDER, Jürgen, 90482 Nürnberg (DE); Zec, Mladen, 90491 Nürnberg (DE)

(57) **Zusammenfassung**

Die Erfindung betrifft einen Rotor für einen Elektromotor, insbesondere einen bürstenlosen Gleichstrommotor, mit mehreren Magneten (11), die jeweils zwischen zwei in Umfangsrichtung angeordneten Rotorsegmenten (12) angeordnet sind, wobei die Rotorsegmente (12) jeweils durch Blechpakete (13) gebildet sind, an welche sich längsaxial jeweils ein Abschlussblech (14) anschließt, und wobei die Abschlussbleche (14) jeweils einen Fortsatz (15) aufweisen, der radial nach innen über die Blechpakete (13) vorsteht. Des Weiteren betrifft die Erfindung ein Herstellungsverfahren für einen derartigen Rotor.

## Beschreibung

Die Erfindung betrifft einen Rotor für einen Elektromotor, insbesondere einen bürstenlosen Gleichstrommotor, sowie ein Herstellungsverfahren hierfür.

Bürstenlose Gleichstrommotoren weisen üblicherweise einen Rotor auf, der mehrere Magnete umfasst. Die Magnete können in einem Rotorkäfig angeordnet sein, der mit einer Rotorwelle verbindbar ist. Dabei erfolgt die Verbindung zwischen den Magneten und dem Rotorkäfig meist durch Einpressen der Magnete in entsprechende Magnetaufnahmen im Rotorkäfig. Dabei kann es zu einer Beschädigung der Magnete kommen. Die Verbindung des Rotors mit einer Rotorwelle erfolgt oft durch formschlüssig ineinandergreifende Verbindungskonturen. Bei diesem Montageschritt besteht die Gefahr, dass der Rotor oder die Rotorwelle beim Fügen beschädigt werden.

Die Aufgabe der Erfindung besteht darin, einen Rotor für einen Elektromotor anzugeben, der mit geringer Gefahr einer Beschädigung montierbar ist. Ferner ist es Aufgabe der Erfindung, ein Verfahren zur Herstellung eines solchen Rotors anzugeben.

Diese Aufgabe wird im Hinblick auf den Rotor durch den Gegenstand des Patentanspruchs 1 und im Hinblick auf das Herstellungsverfahren durch den Gegenstand des Patentanspruchs 10 gelöst.

So beruht die Erfindung auf dem Gedanken, einen Rotor für einen Elektromotor, insbesondere einen bürstenlosen Gleichstrommotor, mit mehreren Magneten anzugeben, die jeweils zwischen zwei in Umfangsrichtung angeordneten Rotorsegmenten angeordnet sind. Die Rotorsegmente sind jeweils durch Blechpakete gebildet, an welche sich längsaxial jeweils ein Abschlussblech anschließt. Die Abschlussbleche weisen jeweils einen Fortsatz auf, der radial nach innen über die Blechpakete vorsteht.

Mithin liegt der Erfindung die Idee zugrunde, radial nach innen vorstehende Blechabschnitte am Rotor bereitzustellen, die sich beim Verbinden einer Rotorwelle mit dem Rotor zumindest abschnittsweise umbiegen und so eine kraftschlüssige bzw. reibschlüssige Verbindung zwischen dem Rotor und einer Rotorwelle bereitstellen. Da die Fortsätze der Abschlussbleche beim Fügen der Rotorwelle zumindest abschnittsweise ausweichen, ist eine Beschädigung der Rotorwelle und/oder des Rotors weitgehend vermieden. Darüber hinaus wird das Herstellungsverfahren erheblich vereinfacht, da auf zusätzliche Verbindungskonturen oder Klebeschichten verzichtet werden kann.

Die über die Blechpakete radial nach innen vorstehenden Fortsätze haben den weiteren Vorteil, dass damit Durchmessertoleranzen zwischen den Blechpaketen und der Rotorwelle ausgeglichen werden. Da die überstehenden Fortsätze eine Klemmverbindung mit der Rotorwelle herstellen, sind zusätzliche Klemmelemente nicht erforderlich, wobei die Bauteilanzahl reduziert wird.

Nach einer bevorzugten Ausführungsform ist vorgesehen, dass die Magnete an den Rotorsegmenten luftspaltfrei anliegen. Daraus ergibt sich eine sehr gute magnetische Leistung, die zu einer besonders hohen Effizienz eines mit dem erfindungsgemäßen Rotor ausgestatteten Elektromotors führen.

Ferner kann in einer vorteilhaften Ausgestaltung der Erfindung vorgesehen sein, dass zwischen zwei Abschlussblechen eines Rotorsegments ein Haltering angeordnet ist. Der Haltering ist vorzugsweise aus einem nichtmagnetischen Material gebildet. Der Haltering ermöglicht es, den Rotor bzw. die Blechpakete der Rotorsegmente zu stabilisieren.

In einer weiteren bevorzugten Ausführungsform der Erfindung ist vorgesehen, dass der Fortsatz eine Lasche aufweist, die in axialer Richtung umgebogen ist und sich parallel zu einer Längsachse des Rotors erstreckt. Die Lasche kann eine Länge aufweisen, die höchstens der Höhe des Blechpakets oder des Halterings entspricht. Ferner kann vorgesehen sein, dass die Lasche zwischen einer Innenumfangsfläche des Blechpakets oder Halterings und einer Außenumfangsfläche einer Rotorwelle klemmfixiert bzw. klemmfixierbar ist.

Die umgebogene Lasche hat damit eine Doppelfunktion. Einerseits ermöglicht es die Lasche, eine Halterung für einen Haltering bereitzustellen. Andererseits dient die Lasche als Klemmfixierungselement zwischen dem Rotor und der Rotorwelle. Dabei kann das Umbiegen der Lasche durch das Einfügen der Rotorwelle in den Rotor erfolgen. Mit einem einzigen Fügeschritt werden also zwei Funktionen erzielt, nämlich das Klemmfixieren der Rotorwelle im Rotor und die Halterung der Halteringe im Rotor.

Bei einer bevorzugten Ausführungsform der Erfindung weisen die Abschlussbleche und/oder die Blechpakete jeweils einen Hauptkörper mit radial nach innen konvergierenden Seitenflächen auf. Jede Seitenfläche kann durch jeweils einen radial inneren Anschlag und einen radial äußeren Anschlag begrenzt sein, zwischen welchen ein Magnet eingepasst ist. Der radial innere Anschlag des Abschlussblechs ist vorzugsweise durch den Fortsatz gebildet. Die beiden Anschläge an den Seitenflächen der Abschlussbleche bilden somit eine Formkontur, die einen Magneten passgenau aufnehmen kann. Dies erleichtert bei der Herstellung des Rotors die Positionierung des Magnets am Rotorsegment.

Vorzugsweise sind die Rotorsegmente und die Magnete durch eine gemeinsame Umspritzung, durch eine Bandage oder durch wenigstens ein axiales Formbauteil fixiert. Dabei kann die Umspritzung den Rotor alleine umfassen oder auch eine Rotorwelle, die in dem Rotor klemmfixiert ist.

Bei einer weiteren Ausführungsform der Erfindung erstreckt sich die Umspritzung zwischen einer Rotorwelle und den Rotorsegmenten. Dabei kann die Umspritzung die Fortsätze formschlüssig umgreifen. Die Umspritzung fixiert so die Rotorsegmente an einer Rotorwelle. Die Rotorwelle kann auf diese Weise bei der Herstellung des Rotors mit Spiel in eine von den Rotorsegmenten begrenzte Durchgangsöffnung eingefügt werden, so dass eine Beschädigung der Fortsätze vermieden wird. Durch die Umspritzung erfolgt dann vorteilhafte eine formschlüssige Fixierung der Fortsätze. Insbesondere können die Fortsätze jeweils einen Hinterschnitt bilden, in welchen das Umspritzungsmaterial einfließt und so eine formschlüssige Fixierung bilden.

Die vorliegende Erfindung beruht auch auf dem Gedanken, ein Verfahren zur Herstellung eines Rotors für einen Elektromotor, insbesondere einen bürstenlosen Gleichstrommotor anzugeben, wobei das Verfahren die folgenden Schritte umfasst:
a) Bildung mehrerer Rotorsegmente aus Blechpaketen und Abschlussblechen, wobei jeweils mehrere Rotorbleche zu einem Blechpaket gestapelt und längsaxial mit einem Abschlussblech verbunden werden;
b) Anordnen mehrerer Rotorsegmente in einer Reihe zur Bildung einer Segmentkette, wobei zwischen den einzelnen Rotorsegmenten ein Freiraum verbleibt;
c) Einfügen von Magneten in die Freiräume der Segmentkette;
d) Aufrollen der Segmentkette zur Bildung einer zylinderförmigen Vorbaugruppe für den Rotor.

Das erfindungsgemäße Herstellungsverfahren ermöglicht eine besonders einfache und vor allem für die Magnete beschädigungsfreie Montage eines Rotors. Indem die Rotorsegmente zunächst als Segmentkette in einer Reihe angeordnet sind, verbleiben zwischen den einzelnen Rotorsegmenten große Freiräume, in welche die Magnete eingesetzt werden können. Da die Magnete nicht, wie im Stand der Technik üblich in einen Käfig einzupressen sind, sondern vielmehr in die leicht zugänglichen Freiräume eingelegt werden, ist eine beschädigungsfreie Montage der Magnete ermöglicht.

Gleichzeitig können die Magnete auf diese Weise gut an die Rotorsegmente angelegt werden, so dass ein luftspaltfreier Kontakt der Magnete mit den Rotorsegmenten gewährleistet ist. So ist ein qualitativ besonders hochwertiger Rotor herstellbar, bei welchem ein besonders hoher magnetischer Fluss ohne einen magnetischen Kurzschluss erreicht wird. Insbesondere wird eine Beschädigung der Magnetoberfläche vermieden, da beim Einlegen der Magnete in die Freiräume keine schiebende, die Magnetoberfläche potentiell verkratzende Bewegung erfolgt.

Bei einer vorteilhaften Variante des erfindungsgemäßen Herstellungsverfahrens wird die zylinderförmige Vorbaugruppe durch eine Umspritzung und/oder eine Bandage und/oder wenigstens ein Formbauteil fixiert. So ist sichergestellt, dass die Zylinderform der Vorbaugruppe beibehalten wird.

Vor dem Aufrollen der Segmentkette kann zwischen wenigstens zwei Abschlussblechen eines Rotorsegments ein Haltering angeordnet werden. Die Segmentkette kann dann um den Haltering aufgerollt werden. Der Haltering ermöglicht so eine Führung bei der Umformung der Segmentkette in die Zylinderform der Vorbaugruppe. Insbesondere stabilisiert der Haltering die Blechpakete während des Rollvorgangs zueinander.

Nach dem Aufrollen der Segmentkette kann eine Rotorwelle in die zylinderförmige Vorbaugruppe eingepresst werden. Das Einpressen der Rotorwelle kann dabei vor der Umspritzung bzw. Anordnung einer Bandage oder Fixierung der Vorbaugruppe durch ein Formbauteil erfolgen. Alternativ ist es möglich, die Vorbaugruppe zunächst mittels einer Umspritzung, einer Bandage oder einem Formbauteil zu fixieren und anschließend die Rotorwelle einzupressen.

Alternativ oder zusätzlich ist es möglich, dass die Rotorwelle durch die oben beschriebene Umspritzung mit der zylinderförmigen Vorbaugruppe formschlüssig verbunden wird. Vorteilhafterweise kann die Rotorwelle mit Spiel in die Vorbaugruppe eingesetzt werden, wobei anschließend die Vorbaugruppe umspritzt wird. Das Umspritzungsmaterial kann dabei in den Zwischenraum zwischen der Rotorwelle und der Vorbaugruppe einfließen, in welchen sich die Fortsätze hinein erstrecken. Vorzugsweise weisen die Fortsätze jeweils eine Hinterschnittkontur auf, so dass die Umspritzung einen Formschluss zu den Fortsätzen bildet.

Beim Einpressen der Rotorwelle werden vorzugweise Laschen von radial nach innen über die Blechpakete und/oder den Haltering vorstehenden Fortsätzen der Abschlussbleche umgebogen und zwischen die Rotorwelle und die Blechpakete und/oder den Haltering eingeklemmt. Mit dem Einpressvorgang werden also zwei Funktionen kombiniert. Einerseits die Fixierung der Rotorwelle innerhalb der Vorbaugruppe durch eine Klemmverbindung zwischen der Rotorwelle und den umgebogenen Laschen. Andererseits dienen die Laschen als Halteelement, um den Haltering innerhalb der Blechpakete zu fixieren.

Ein weiterer Aspekt der Erfindung betrifft die Verwendung eines zuvor beschriebenen Verfahrens zur Herstellung eines Rotors, wie er eingangs in der vorliegenden Anmeldung beschrieben ist.

Die Erfindung wird im Folgenden anhand von Ausführungsbeispielen unter Bezugnahme auf die beigefügten, schematischen Zeichnungen näher erläutert. Darin zeigen:
- Figuren 1 und 2:: Verschiedene Schritte eines erfindungsgemäßen Herstellungsverfahrens für einen Rotor nach einem bevorzugten Ausführungsbeispiel;
- Figur 3:: eine perspektivische Ansicht einer Vorbaugruppe für einen erfindungsgemäßen Rotor, die gemäß dem Verfahren nach Figuren 1 und 2 hergestellt ist;
- Figur 4:: einen erfindungsgemäßen Rotor mit der Vorbaugruppe gemäß Fig. 3;
- Figuren 5 bis 7:: verschiedene Schritte eines erfindungsgemäßen Herstellungsverfahrens für einen Rotor nach einem weiteren bevorzugten Ausführungsbeispiel;
- Figur 8:: eine Schnittansicht durch einen Rotor, der mit dem Herstellungsverfahren gemäß Figuren 5 bis 7 hergestellt ist; und
- Figur 9:: eine Detailansicht des Rotors gemäß Fig. 8.

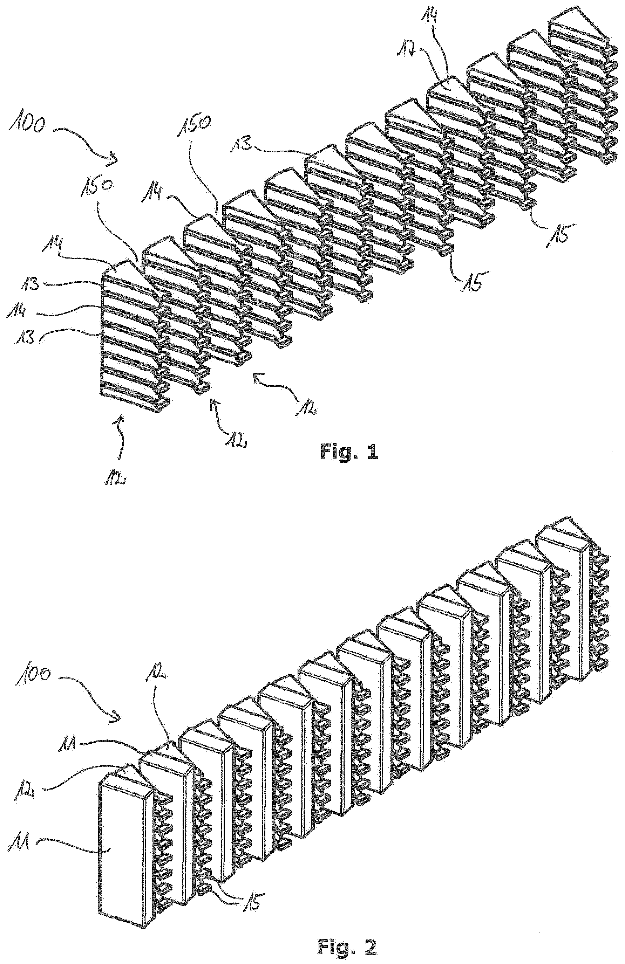

In Fig. 1 ist ein erster Teilschritt eines erfindungsgemäßen Herstellungsverfahrens nach einem bevorzugten Ausführungsbeispiel gezeigt, wobei zunächst eine Segmentkette 100 bereitgestellt wird. Die Segmentkette 100 umfasst mehrere Rotorsegmente 12, die in einer Reihe angeordnet sind. Jedes Rotorsegment 12 ist aus Blechpaketen 13 gebildet, wobei jedes Blechpaket 13 jeweils ein Abschlussblech 14 umfasst. Das Abschlussblech 14 schließt sich längsaxial an das zugehörige Blechpaket 13 an.

Die Blechpakete 13 sind ihrerseits aus mehreren Rotorblechen gebildet, die übereinandergestapelt sind. Die Rotorbleche weisen im Wesentlichen eine dreiecksförmige Grundform auf. Ebenso weisen die Abschlussbleche 14 einen Hauptkörper 17 auf, der eine dreiecksförmige Grundstruktur umfasst. An den Hauptkörper 17 ist ein Fortsatz 15 angeformt, der bei dem Ausführungsbeispiel gemäß Figuren 1 bis 4 ebenfalls dreiecksförmig ausgebildet ist. Insgesamt bildet das Abschlussblech 14 bei dem Ausführungsbeispiel gemäß Fig. 1 bis 4 eine doppeldreiecksförmige Kontur, wobei sich der Fortsatz 15 ausgehend von einer Spitze des Hauptkörpers 17 verbreitert.

Der Hauptkörper 17 des Abschlussbleches 14 umfasst zueinander konvergierende Seitenflächen. Die Seitenflächen enden an einer Außenumfangskante des Hauptkörpers, die die Seitenflächen miteinander verbindet. Andererseits sind die Seitenflächen durch den Fortsatz 15 begrenzt.

Die Blechpakete 13 weisen jeweils einen radial inneren Anschlag 18 und einen radial äußeren Anschlag 19 auf. Zusätzlich kann auch der Fortsatz 15 des Abschlussblechs 14 als radial innerer Anschlag 18 wirken.

Zwischen den einzelnen Rotorsegmenten 12 der Segmentkette 100 ist ein Freiraum 150 angeordnet. Es ist gut erkennbar, dass der Freiraum 150 zumindest auf Seiten der Fortsätze 15 gut zugänglich ist. Diese Zugänglichkeit wird bei dem erfindungsgemäßen Herstellungsverfahren vorteilhaft dazu genutzt, Magnete 11 an den Rotorsegmenten 12 anzuordnen. Konkret werden die Magnete 11, die quaderförmig ausgebildet sind, zwischen dem radial inneren Anschlag 18 und dem radial äußeren Anschlag 19 an die Seitenflächen der Hauptkörper 17 der Abschlussbleche 14 angelegt. Dabei wird ein luftspaltfreier Kontakt zu den Rotorsegmenten 12 hergestellt.

Die Anschläge 18, 19 sind vorzugsweise derart gestaltet, das der Magnet passgenau, insbesondere formschlüssig, zwischen diese einsetzbar ist. Auf diese Weise sichern die Anschläge 18, 19 die Position des Magneten in radialer Richtung.

Die Anordnung der Magnete 11 in einem weiteren Schritt des erfindungsgemäßen Herstellungsverfahrens ist beispielhaft in Fig. 2 dargestellt.

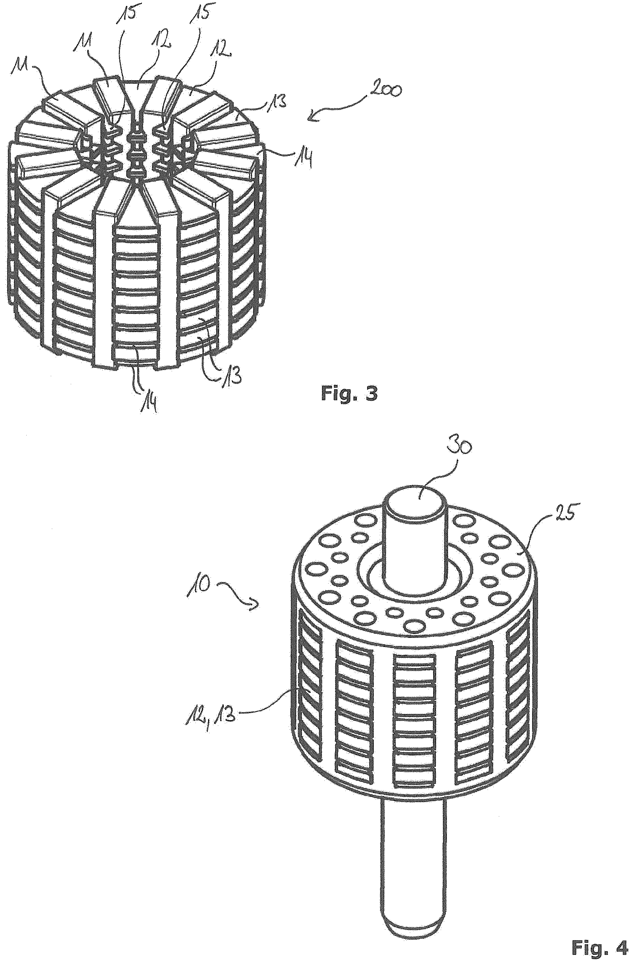

Nach der Anordnung der Magnete 11 an den Rotorsegmenten 12 der Segmentkette 100 wird die Segmentkette 100 aufgerollt bzw. in eine Zylinderform überführt. Dabei gelangen die Magnete 11 mit den jeweils noch zuvor beabstandeten Rotorsegmenten 12 in einen luftspaltfreien Kontakt. Die zylinderförmig aufgerollte Segmentkette 100 bildet so eine zylinderförmige Vorbaugruppe 200 des Rotors 10, wie sie beispielhaft in Fig. 3 gezeigt ist.

In Fig. 3 ist gut erkennbar, dass die Vorbaugruppe eine zentrale Durchgangsöffnung aufweist, in welche die Fortsätze 15 vorstehen. Die Fortsätze 15 der Abschlussbleche 14 stehen also radial nach innen über die Blechpakete 13 vor.

In einem weiteren Herstellungsschritt wird nun eine Rotorwelle 30 in die Durchgangsöffnung der Vorbaugruppe 200 eingeschoben. Bei dem Ausführungsbeispiel gemäß Figuren 1 bis 4 erfolgt das Einschieben der Rotorwelle 30 mit Spiel, so dass zwischen der Vorbaugruppe 200 und der Rotorwelle 30 ein Ringspalt verbleibt. In diesen Ringspalt erstrecken sich die Fortsätze 15 radial nach innen.

Die dreieckförmige Kontur der Fortsätze 15 bildet einen Hinterschnitt, der von der Umspritzung 25 umgriffen wird. Mit anderen Worten fließt das Umspritzungsmaterial in den Ringspalt zwischen der Rotorwelle 30 und der Vorbaugruppe 200, so dass die Fortsätze 15 vollständig in die Umspritzung 25 eingebettet sind. Damit wird ein formschlüssiger Kontakt zur Vorbaugruppe 200 hergestellt. Wie in Fig. 4 gut erkennbar ist, umgreift die Umspritzung 25 auch die Rotorwelle 30, so dass auch insoweit ein Formschluss besteht. Die Rotorwelle 30 ist folglich mittels der Umspritzung 25 formschlüssig mit der Vorbaugruppe 200 verbunden.

Das Ergebnis des Herstellungsverfahrens ist ein Rotor 10 mit einer Rotorwelle 30, wobei der Rotor 10 mehrere Magnete 11 aufweist, die zwischen jeweils zwei in Umfangsrichtung angeordneten Rotorsegmenten 12 angeordnet sind, wobei der Rotor 10 mit einer Umspritzung 25 versehen ist. Ein solcher Rotor 10 nach einem bevorzugten Ausführungsbeispiel der Erfindung ist in Fig. 4 dargestellt.

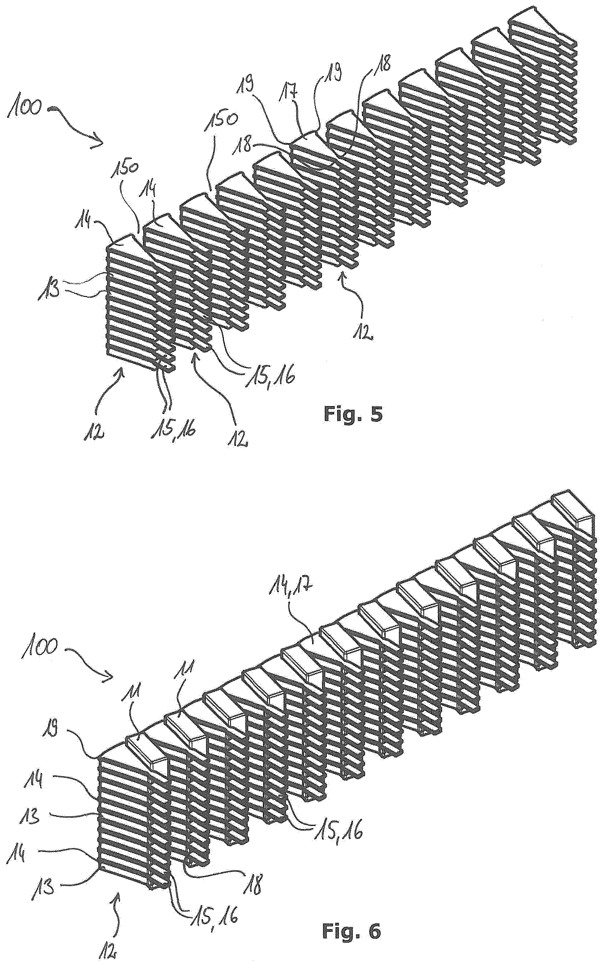

Die Figuren 5 bis 7 zeigen ein alternatives Ausführungsbeispiel eines erfindungsgemäßen Herstellungsverfahrens zur Herstellung eines Rotors 10. Bei dem hier vorgeschlagenen Ausführungsbeispiel wird analog zum Ausführungsbeispiel gemäß Figuren 1 und 2 zunächst eine Segmentkette 100 aus mehreren Rotorsegmenten 12 bereitgestellt. Die Segmentkette 100 ist durch geradliniges Aufreihen mehrerer Rotorsegmente 12 gebildet, wobei jedes Rotorsegment 12 aus mehreren Blechpaketen 13 hergestellt ist, an die sich jeweils ein Abschlussblech 14 anschließt.

Die Blechpakete 13 sind im Wesentlichen identisch zu den Blechpaketen 13 gemäß dem Ausführungsbeispiel nach Figuren 1 bis 4 ausgebildet.

Die Abschlussbleche 14 umfassen jeweils einen Hauptkörper 17, dessen Gestaltung ebenfalls der Gestaltung des Hauptkörpers 17 bei dem Ausführungsbeispiel gemäß Figuren 1 bis 4 entspricht.

Die Abschlussbleche 14 unterscheiden sich von dem Ausführungsbeispiel gemäß Figuren 1 bis 4 lediglich in der Gestaltung der Fortsätze 15. Während bei dem Ausführungsbeispiel gemäß Figuren 1 bis 4 die Fortsätze 15 im Wesentlichen eine dreiecksförmige Gestaltung aufweisen, sind die Fortsätze 15 bei dem Ausführungsbeispiel gemäß Figuren 5 bis 7 als Laschen 16 ausgebildet, die hauptsächlich einen rechteckförmigen Abschnitt aufweisen, an den sich zum Hauptkörper 17 hin eine Verjüngung anschließt. Mit anderen Worten weist der Fortsatz 15 einen dreiecksförmigen Anschlussbereich an den Hauptkörper 17 auf, der durch eine rechteckförmige Verlängerung, die Lasche 16, verlängert ist.

Die Anordnung der Magnete 11 an den Rotorsegmenten 12 erfolgt analog zu dem Ausführungsbeispiel gemäß Figuren 1 bis 4, wie dies in Fig. 6 dargestellt ist. Insbesondere sind die Magnete 11 zwischen die Anschläge 18, 19 eingesetzt und liegen luftspaltfrei an den Rotorsegmenten 12 an.

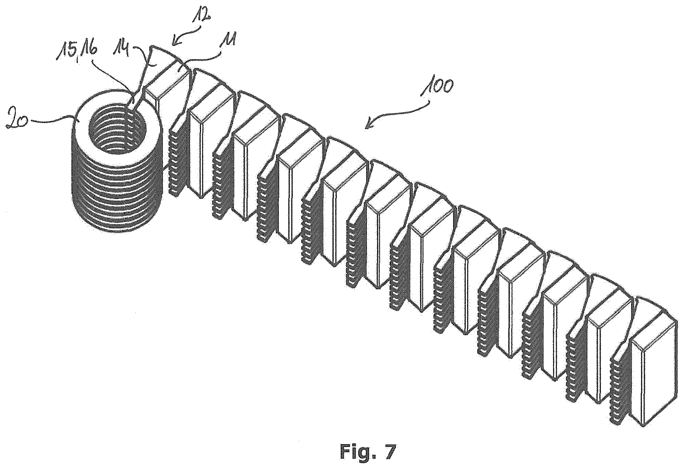

Das Verfahren gemäß Figuren 5 bis 7 unterscheidet sich vom Herstellungsverfahren gemäß Figuren 1 bis 4 durch einen zusätzlichen Schritt, der in Fig. 7 dargestellt ist. Insbesondere ist vorgesehen, dass vor dem Aufrollen der Segmentkette 100 zur Bildung der zylinderförmigen Vorbaugruppe 200 wenigstens ein, insbesondere mehrere, Halteringe 20 jeweils zwischen zwei Fortsätzen 15 bzw. Laschen eines Rotorsegments 12 angeordnet werden. Die Halteringe 20 liegen dabei vorzugsweise an den Magneten 11 an, bilden jedoch zu den Blechpaketen 13 jeweils einen Luftspalt aus. Die Halteringe 20 umfassen jeweils eine Ringbreite, die kleiner ist als die Länge der Fortsätze 15. Mit anderen Worten stehen die Fortsätze 15, insbesondere die Laschen 16, über die Halteringe 20 radial nach innen vor.

In einem weiteren Schritt wird die Segmentkette 100 aus den Rotorsegmenten 12 und den Magneten 11, die in den Freiräumen 150 angeordnet sind, zu einer zylinderförmigen Vorbaugruppe 200 aufgerollt. Anschließend kann die Vorbaugruppe 200 z.B. mit einer Bandage fixiert werden. Es ist auch denkbar, obgleich nicht besonders bevorzugt, die Vorbaugruppe 200 mittels einer Umspritzung 25 zu fixieren.

Vor oder nach der Fixierung erfolgt das Einsetzen der Rotorwelle 30, wobei diese in die Durchgangsöffnung, die durch die Haltering 12 definiert ist, eingepresst wird. Dabei werden die über die Halteringe 20 radial nach innen vorgestehenden Laschen 16 axial umgebogen und bilden eine Klemmverbindung mit der Rotorwelle 30 aus.

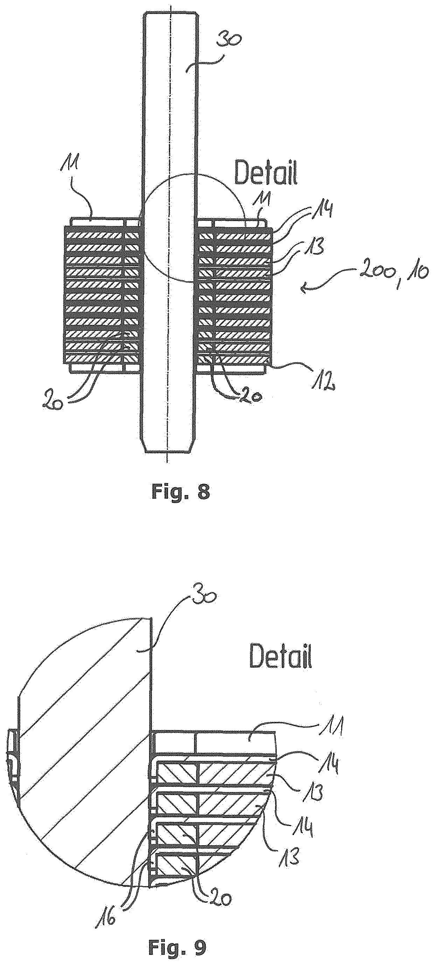

In Fig. 8 ist ein Querschnitt durch einen Rotor 10 mit einer Rotorwelle 30 gezeigt, der nach dem Herstellungsverfahren gemäß Figuren 5 bis 7 produziert ist. Gut erkennbar sind die Blechpakete 13 und die jeweiligen Abschlussbleche 14. Außerdem ist ersichtlich, dass sich an die Blechpakete 13 mit einem Luftspalt radial innen jeweils Halteringe 20 anschließen. Die Abschlussbleche 14 überragen die Halteringe 20 und sind entlang der Rotorwelle 30 längsaxial umgebogen, um so eine Klemmfixierung zu erreichen. Dies ist in der vergrößerten Detaildarstellung gemäß Fig. 9 erkennbar. Die umgebogenen Laschen 16 weisen dabei eine Länge auf, die kleiner als die Höhe der Halteringe 20 ist. So wird gewährleistet, dass sich die Abschlussbleche 14 bzw. deren überstehenden Laschen 16 nicht überlappen und so den Pressvorgang der Rotorwelle 30 unnötig erschweren oder sogar zu einer Beschädigung der Rotorwelle führen.

### Bezugszeichenliste

- 10: Rotor
- 11: Magnet
- 12: Rotorsegment
- 13: Blechpaket
- 14: Abschlussblech
- 15: Fortsatz
- 16: Lasche
- 17: Hauptkörper
- 18: radial innerer Anschlag
- 19: radial äußerer Anschlag
- 20: Haltering
- 25: Umspritzung
- 30: Rotorwelle
- 100: Segmentkette
- 150: Freiraum
- 200: Vorbaugruppe

## Patentansprüche

1. Rotor (10) für einen Elektromotor, insbesondere einen bürstenlosen Gleichstrommotor, mit mehreren Magneten (11), die jeweils zwischen zwei in Umfangsrichtung angeordneten Rotorsegmenten (12) angeordnet sind, wobei die Rotorsegmente (12) jeweils durch Blechpakete (13) gebildet sind, an welche sich längsaxial jeweils ein Abschlussblech (14) anschließt, und wobei die Abschlussbleche (14) jeweils einen Fortsatz (15) aufweisen, der radial nach innen über die Blechpakete (13) vorsteht.

2. Rotor (10) nach Anspruch 1,
**dadurch gekennzeichnet, dass**
die Magnete (11) luftspaltfrei an den Rotorsegmenten (12) anliegen.

3. Rotor (10) nach Anspruch 1 oder 2,
**dadurch gekennzeichnet, dass**
zwischen zwei Abschlussblechen (14) eines Rotorsegments (12) ein Haltering (20) angeordnet ist.

4. Rotor (10) nach einem der vorhergehenden Ansprüche,
**dadurch gekennzeichnet, dass**
der Fortsatz (15) eine Lasche (16) aufweist, die in axialer Richtung umgebogen ist und sich parallel zu einer Längsachse des Rotors (10) erstreckt.

5. Rotor (10) nach Anspruch 3,
**dadurch gekennzeichnet, dass**
die Lasche (16) eine Länge aufweist, die höchstens der Höhe des Blechpakets oder des Halterings entspricht.

6. Rotor nach Anspruch 3 oder 4,
**dadurch gekennzeichnet, dass**
die Lasche zwischen einer Innenumfangsfläche des Blechpakets (13) oder des Halterings (20) und einer Außenumfangsfläche einer Rotorwelle (30) klemmfixiert oder klemmfixierbar ist.

7. Rotor (10) nach einem der Ansprüche 3 bis 6,
**dadurch gekennzeichnet, dass**
die Abschlussbleche (14) jeweils einen Hauptkörper (17) mit radial nach innen konvergierenden Seitenflächen aufweisen, wobei jede Seitenfläche durch jeweils einen radial inneren Anschlag (18) und einen radial äußeren Anschlag (19) begrenzt ist, zwischen welchen ein Magnet (11) eingepasst ist, wobei der radial innere Anschlag (18) durch den Fortsatz (15) gebildet ist.

8. Rotor (10) nach einem der vorhergehenden Ansprüche,
**dadurch gekennzeichnet, dass**
die Rotorsegmente (12) und die Magnete (11) durch eine gemeinsame Umspritzung (25), durch eine Bandage oder durch wenigstens ein axiales Formbauteil fixiert sind.

9. Rotor (10) nach Anspruch 8,
**dadurch gekennzeichnet, dass**
sich die Umspritzung (25) zwischen einer Rotorwelle (30) und den Rotorsegmenten (12) erstreckt und die Fortsätze (15) formschlüssig umgreift.

10. Verfahren zur Herstellung eines Rotors (10) für einen Elektromotor, insbesondere einen bürstenlosen Gleichstrommotor, umfassend die folgenden Schritte:
a) Bildung mehrerer Rotorsegmente (12) aus Blechpaketen (13) und Abschlussblechen (14), wobei jeweils mehrere Rotorbleche zu einem Blechpaket (13) gestapelt und längsaxial mit einem Abschlussblech (14) verbunden werden;
b) Anordnen mehrerer Rotorsegmente (12) in einer Reihe zur Bildung einer Segmentkette (100), wobei zwischen den einzelnen Rotorsegmenten (12) ein Freiraum (150) verbleibt;
c) Einfügen von Magneten (11) in die Freiräume (150) der Segmentkette (100);
d) Aufrollen der Segmentkette (100) zur Bildung einer zylinderförmigen Vorbaugruppe (200) für den Rotor (10).

11. Verfahren nach Anspruch 10,
**dadurch gekennzeichnet, dass**
die zylinderförmige Vorbaugruppe (200) durch eine Umspritzung (25) und/oder eine Bandage und/oder wenigstens ein Formbauteil fixiert wird.

12. Verfahren nach Anspruch 10 oder 11,
**dadurch gekennzeichnet, dass**
vor dem Aufrollen der Segmentkette (100) zwischen wenigstens zwei Abschlussbleche (14) eines Rotorsegments (12) wenigstens ein Haltering angeordnet wird und die Segmentkette (100) um den Haltering (20) aufgerollt wird.

13. Verfahren nach einem der Ansprüche 10 bis 12,
**dadurch gekennzeichnet, dass**
nach dem Aufrollen der Segmentkette (100) eine Rotorwelle (30) in die zylinderförmige Vorbaugruppe (200) eingepresst und/oder durch die Umspritzung (25) mit der zylinderförmige Vorbaugruppe (200) formschlüssig verbunden wird.

14. Verfahren nach Anspruch 13,
**dadurch gekennzeichnet, dass**
beim Einpressen der Rotorwelle (30) Laschen (16) von radial nach innen über die Blechpakete (13) und/oder den Haltering (20) vorstehenden Fortsätzen (15) der Abschlussbleche (14) umgebogen und zwischen die Rotorwelle (30) und die Blechpakete (13) und/oder den Haltering (20) eingeklemmt werden.

15. Verwendung eines Verfahren nach einem der Ansprüche 10 bis 14 zur Herstellung eines Rotors (10) nach einem der Ansprüche 1 bis 9.
